# EUROPÄISCHE PATENTSCHRIFT

(11) **EP 1 852 601 B1**
(45) Veröffentlichungstag und Bekanntmachung des Hinweises auf die Patenterteilung: **14.09.2011**
(21) Anmeldenummer: 06125710.1
(22) Anmeldetag: 08.12.2006
(51) Int. Cl.: F02M 45/08, F02M 47/02, F02M 67/14

(54) **Verfahren zur direkten Kraftstoffeinspritzung in einen Zylinder einer Brennkraftmaschine und Einspritzdüse zur Durchführung der Einspritzung**
Method for direct fuel injection into a cylinder of a combustion engine and injector for performing the injection
Procédé d'injection directe de carburant dans un cylindre de moteur à combustion et buse d'injection destinée à l'exécution de l'injection

(30) Priorität: 02.05.2006 DE 102006020223
(43) Veröffentlichungstag der Anmeldung: 07.11.2007
(73) Patentinhaber: Ford Global Technologies, LLC, Dearborn, MI 48126 (US)
(72) Erfinder: Yacoub, Yasser Mohammed Sayed, 50858, Köln (DE)
(74) Vertreter: Drömer, Hans-Carsten

(56) Entgegenhaltungen:
- EP-A- 1 174 608
- EP-A1- 0 237 071
- WO-A-01/59280
- DE-A1- 10 245 161
- US-A1- 2002 017 269
- US-A1- 2004 256 495

## Beschreibung

Die Erfindung betrifft ein Verfahren zur Kraftstoffeinspritzung in mindestens einen Zylinder einer direkteinspritzenden Brennkraftmaschine, welche in dem mindestens einen Zylinder mindestens eine Einspritzdüse zur Einspritzung von Kraftstoff in diesen Zylinder aufweist, wobei mittels dieser mindestens einen Einspritzdüse sowohl flüssiger Kraftstoff als auch gasförmiger Kraftstoff einspritzbar ist.

Des weiteren betrifft die Erfindung eine Einspritzdüse zur Einspritzung von Kraftstoff in einen Zylinder einer direkteinspritzenden Brennkraftmaschine, die
■ sowohl zur Einspritzung von flüssigem Kraftstoff als auch zur Einspritzung von gasförmigem Kraftstoff geeignet ist, wozu eine erste Versorgungsleitung zur Versorgung der Einspritzdüse mit gasförmigem Kraftstoff und eine zweite Versorgungsleitung zur Hochdruckversorgung der Einspitzdüse mit flüssigem Kraftstoff vorgesehen ist,
■ mindestens eine Düsenöffnung zur Zuführung des Kraftstoffes in den Zylinder umfasst, und
■ eine in Längsrichtung der Einspritzdüse zwischen einer Ruheposition und einer Arbeitsposition verschiebbare Düsennadel aufweist, wobei die Düsennadel in der Ruheposition die mindestens eine Düsenöffnung verschließt und in der Arbeitsposition diese mindestens eine Düsenöffnung zur Einspritzung des Kraftstoffes freigibt.

Die US 2004/0256495 A1 beschreibt ein Einspritzverfahren, bei dem sowohl flüssiger als auch gasförmiger Kraftstoff in den Zylinder einer Brennkraftmaschine eingespritzt wird, wobei der flüssige Kraftstoff im Rahmen einer Voreinspritzung eingespritzt wird, um eine verbesserte Selbstzündung des während einer Haupteinspritzung einzuspritzenden gasförmigen Kraftstoffes zu gewährleisten. Eine Einspritzdüse zur Durchführung eines derartigen Einspritzverfahrens offenbart die US 2004/0256495 A1 ebenfalls.

Nach dem Stand der Technik werden Brennkraftmaschinen zur Reduzierung der Schadstoffemissionen mit verschiedenen Abgasnachbehandlungssystemen ausgestattet.

Bei Ottomotoren kommen nach dem Stand der Technik unter anderem katalytische Reaktoren zum Einsatz, die unter Verwendung katalytischer Materialien, die die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb (λ ≈ 1) des Ottomotors erfordert.

Dabei werden die Stickoxide NOₓ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuss betrieben werden, also beispielsweise im Magerbetrieb arbeitende Ottomotoren, insbesondere aber auch direkteinspritzende Dieselmotoren und direkteinspritzende Ottomotoren, können die im Abgas befindlichen Stickoxide prinzipbedingt - d. h. aufgrund der fehlenden Reduktionsmittel - nicht reduziert werden.

Zur Oxidation der unverbrannten Kohlenwasserstoffe (HC) und von Kohlenmonoxid (CO) wird daher ein Oxidationskatalysator im Abgassystem vorgesehen.

Zur Reduzierung der Stickoxide können selektive Katalysatoren - sogenannte SCR-Katalysatoren - eingesetzt werden, bei denen gezielt Reduktionsmittel in das Abgas eingebracht wird, um die Stickoxide selektiv zu vermindern. Als Reduktionsmittel kommen neben Ammoniak und Harnstoff auch unverbrannte Kohlenwasserstoffe zum Einsatz.

Letzteres wird auch als HC-Anreicherung bezeichnet, wobei die unverbrannten Kohlenwasserstoffe direkt in den Abgastrakt eingebracht werden oder aber durch innermotorische Maßnahmen, nämlich durch mindestens eine Nacheinspritzung von zusätzlichem Kraftstoff in den Brennraum nach der eigentlichen Haupteinspritzung, zugeführt werden.

Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet bzw. ausgeschoben werden. Dies führt zu einer Anreicherung des Abgases mit unverbrannten Kohlenwasserstoffen als Reduktionsmittel.

Brennkraftmaschinen, die von einer Nacheinspritzung Gebrauch machen, sind aber von Hause aus sehr anfällig für eine Verdünnung bzw. Kontaminierung des Öls durch unverbrannte Kohlenwasserstoffe. In Abhängigkeit von der Quantität des nacheingespritzten Kraftstoffes und dem Einspritzzeitpunkt, gelangt ein mehr oder weniger großer Anteil des nacheingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Durch die Veränderung der Schmierstoffeigenschaften des Öls hat die Ölverdünnung maßgeblich Einfluss auf den Verschleiß und die Haltbarkeit d.h. die Lebensdauer der Brennkraftmaschine.

Die Ölverdünnung nimmt mit steigender Kraftstoffmenge und Verschieben der Nacheinspritzung nach spät zu, worauf im folgenden kurz eingegangen wird.

Wird die Nacheinspritzung während der Expansion durchgeführt und der Kolben befindet sich in der Nähe des oberen Totpunktes (OT), dann trifft ein überwiegender Anteil des nacheingespritzten Kraftstoffes auf den Kolbenboden bzw. in eine im Kolbenboden vorgesehene Kolbenmulde. Dabei gelangt vergleichsweise wenig Kraftstoff auf die Zylinderinnenwand. Hierfür sollte die Nacheinspritzung bis spätestens 25°KW nach dem oberen Totpunkt (OT) erfolgen.

Der Öffnungswinkel des Einspritzstrahles, der von der Düsengeometrie mitbestimmt wird, hat aber neben der Kolbenstellung bzw. dem Einspritzzeitpunkt maßgeblichen Einfluss auf den Kraftstoffanteil, der die Zylinderinnenwand benetzt und zur Ölverdünnung beiträgt, weshalb der angegebene Einspritzzeitpunkt für die Nacheinspritzung nur beispielhaften Charakter haben kann. Es soll lediglich verdeutlicht werden, dass die Nacheinspritzung in einem vergleichsweise engen Kurbelwinkelbereich und möglichst früh zu erfolgen hat, wenn im Hinblick auf eine geringe Ölverdünnung das Ziel verfolgt wird, dass möglichst wenig Kraftstoff im Rahmen der Nacheinspritzung auf die Zylinderinnenwand gelangt.

Wird nämlich die Nacheinspritzung während der Expansion durchgeführt und der Kolben befindet sich nicht mehr in der Nähe des oberen Totpunktes (OT) bzw. in der Nähe des unteren Totpunktes (UT), dann gelangt ein großer Anteil des nacheingespritzten Kraftstoffes auf die Zylinderinnenwand. Eine entsprechend hohe Ölverdünnung ist die Folge.

Um die Ölverdünnung zu minimieren, werden nach dem Stand der Technik verschiedene Maßnahmen ergriffen. So kann ein unterstöchiometrischer Betrieb der Brennkraftmaschine (λ<1) nicht nur durch eine Erhöhung der Kraftstoffmenge, sondern auch durch eine Verringerung der Sauerstoffmenge realisiert werden, was beispielsweise durch Drosselung der Luftzufuhr im Ansaugtrakt oder durch Erhöhung der Abgasrückführrate erreicht werden kann. Beschränkungen ergeben sich dabei insbesondere durch die Rauchgrenze und die Emissionen an unverbrannten Kohlenwasserstoffen, die in einem Zielkonflikt zueinander stehen.

Zielführend im Hinblick auf eine möglichst geringe Ölverdünnung ist es aber auch, die mindestens eine Nacheinspritzung möglichst früh durchzuführen d. h. einen Einspritzzeitpunkt zu wählen, der nahe dem oberen Totpunkt (OT) liegt, was sich bereits aus den oben dargelegten Ausführungen ableiten lässt und darauf zurückzuführen ist, dass dabei möglichst wenig Kraftstoff auf die Zylinderinnenwand gelangt. Diese Vorgehensweise bringt aber starke Einschränkungen beim Betreiben der Brennkraftmaschine d.h. bei der Wahl der Betriebsparameter mit sich. Insbesondere ist es schwierig, den Kraftstoff möglichst früh einzuspritzen und gleichzeitig eine Zündung des nacheingespritzten Kraftstoffes zu verhindern. Gerade dies ist aber erforderlich, wenn die Nacheinspritzung zur Anreicherung des Abgases mit unverbrannten Kohlenwasserstoffen dienen soll und die unverbrannten Kohlenwasserstoffe in den Abgastrakt ausgeschoben werden sollen.

Zur Minimierung der Ölverdünnung wird nach dem Stand der Technik des weiteren vorgeschlagen, die im Rahmen einer Nacheinspritzung einzuspritzende Kraftstoffmenge auf eine Vielzahl von Nacheinspritzungen zu verteilen und damit die Kraftstoffmenge jeder einzelnen Nacheinspritzung zu verkleinern. Dieser Vorgehensweise liegt die Überlegung zugrunde, dass eine geringere nacheingespritzte Kraftstoffmenge zu einem kürzeren Einspritzstrahl führt. Der nacheingespritzte Kraftstoff soll dabei verdampfen und/oder verbrennen bevor er auf die Zylinderinnenwand trifft. Auch dies führt zu Einschränkungen beim Betrieb der Brennkraftmaschine und zu einer erhöhten Komplexität der Steuerung.

Grundsätzlich können die Stickoxidemissionen auch mit sogenannten Stickoxidspeicherkatalysatoren (**LNT - Lean NOₓ Trap**) reduziert werden. Dabei werden die Stickoxide zunächst - während eines mageren Betriebs der Brennkraftmaschine - im Katalysator absorbiert d.h. gesammelt und gespeichert, um dann während einer Regenerationsphase beispielsweise mittels eines unterstöchiometrischen d.h. fetten Betriebs (beispielsweise λ < 0,95) der Brennkraftmaschine bei Sauerstoffmangel reduziert zu werden. Der unterstöchiometrische Betrieb der Brennkraftmaschine führt zu einer Anreicherung des Abgases mit unverbrannten Kohlenwasserstoffen, die als Reduktionsmittel zur Reduktion der im LNT gespeicherten Stickoxide (NOₓ) dienen.

Die Anfettung kann mittels innermotorischer Maßnahmen, beispielsweise durch Nacheinspritzung von Kraftstoff in den Zylinder, erfolgen, wobei die Kraftstoffnacheinspritzung mit den bereits weiter oben ausführlich dargelegten Nachteilen einer Ölverdünnung verbunden ist.

Während der Reinigungsphase werden die Stickoxide im LNT freigegeben und im wesentlichen in Stickstoffdioxid (N₂), Kohlenstoffdioxid (CO₂) und Wasser (H₂O) umgewandelt. Die Häufigkeit der Regenerationsphasen wird durch die Gesamtemission an Stickoxiden und die Speicherkapazität des LNT bestimmt.

Die Temperatur des Speicherkatalysators (LNT) sollte vorzugsweise in einem Temperaturfenster zwischen 200°C und 450°C liegen, so dass einerseits eine schnelle Reduktion sichergestellt wird und andererseits keine Desorption ohne Konvertierung der wieder freigegebenen Stickoxide stattfindet, was durch zu hohe Temperaturen ausgelöst werden kann.

Der im Abgas enthaltene Schwefel wird ebenfalls im LNT absorbiert und muss im Rahmen einer sogenannten Desulfurisation (deSOₓ) d. h. einer Entschwefelung regelmäßig aus dem Speicherkatalysator entfernt werden. Hierfür muss der LNT auf hohe Temperaturen, üblicherweise zwischen 600°C und 700 °C, erwärmt und mit einem Reduktionsmittel versorgt werden, was durch die Nacheinspritzung von Kraftstoff erreicht werden kann. Die Nacheinspritzung von Kraftstoff kann dabei sowohl zur Anreicherung des Abgases mit unverbrannten Kohlenwasserstoffen genutzt werden als auch zur Erhöhung der Abgastemperatur dienen, wobei für eine Erhöhung der Abgastemperatur der nacheingespritzte Kraftstoff zu zünden und zu verbrennen ist. Die Entschwefelung eines LNT wird folglich in zwei Schritten durchgeführt, wobei zunächst die Abgastemperatur erhöht und anschließend die Abgasanreicherung eingeleitet wird.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration des Filters intermittierend verbrannt werden. Die Intervalle der Regeneration werden dabei unter anderem durch den Abgasgegendruck, der sich infolge des zunehmenden Strömungswiderstandes des Filters aufgrund der anwachsenden Partikelmasse im Filter einstellt, mitbestimmt.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muss auf zusätzliche Maßnahmen zurückgegriffen werden, um eine Regeneration des Filters unter allen Betriebsbedingungen zu gewährleisten.

Die Verbrennung der Partikel kann dabei durch im Abgastrakt vorgesehene Zusatzbrenner erfolgen oder aber durch eine Nacheinspritzung von zusätzlichem Kraftstoff in den Brennraum, wobei der nacheingespritzte Kraftstoff bereits im Brennraum gezündet wird, was durch die auslaufende Hauptverbrennung oder die gegen Ende der Verbrennung im Brennraum vorliegenden hohen Temperaturen geschehen kann, so dass die Abgastemperatur der in den Abgastrakt ausgeschobenen Abgase innermotorisch angehoben wird. Nachteilig an dieser Vorgehensweise sind insbesondere die im Abgastrakt auf dem Weg zum Filter zu befürchtenden Wärmeverluste und die damit verbundene Temperaturabsenkung der heißen Abgase, aber auch die mit einer Nacheinspritzung verbundene Ölverdünnung.

Vor diesem Hintergrund ist es eine Aufgabe der vorliegenden Erfindung, ein Verfahren gemäß dem Oberbegriff des Anspruchs 1 aufzuzeigen, mit dem eine mehrfache Kraftstoffeinspritzung bzw. eine Nacheinspritzung von Kraftstoff in mindestens einen Zylinder der Brennkraftmaschine realisiert werden kann, wobei gleichzeitig eine Ölverdünnung durch nacheingespitzten Kraftstoff weitestgehend verhindert bzw. minimiert wird.

Eine weitere Teilaufgabe ist es, eine Einspritzdüse zur Durchführung eines derartigen Einspritzverfahrens bereitzustellen.

Gelöst wird die erste Teilaufgabe durch ein Verfahren zur Kraftstoffeinspritzung in mindestens einen Zylinder einer direkteinspritzenden Brennkraftmaschine, welche in dem mindestens einen Zylinder mindestens eine Einspritzdüse zur Einspritzung von Kraftstoff in diesen Zylinder aufweist, wobei mittels dieser mindestens einen Einspritzdüse sowohl flüssiger Kraftstoff als auch gasförmiger Kraftstoff einspritzbar ist, das dadurch gekennzeichnet ist, dass
■ während einer Haupteinspritzung, in deren Rahmen der Kraftstoff für die Hauptverbrennung bereitgestellt wird, flüssiger Kraftstoff mittels der mindestens einen Einspritzdüse eingespritzt wird, und
■ mindestens eine Nacheinspritzung in mindestens einen Zylinder der Brennkraftmaschine vorgenommen wird, in deren Rahmen im wesentlichen gasförmiger Kraftstoff mittels der mindestens einen Einspritzdüse eingespritzt wird.

Gemäß dem erfindungsgemäßen Verfahren wird im Rahmen der mindestens einen Nacheinspritzung gasförmiger Kraftstoff verwendet. Gasförmiger Kraftstoff erleichtert die Gemischbildung und Gemischaufbereitung erheblich.

Bei der Verwendung von flüssigem Kraftstoff ist es - neben der eigentlichen Dosierung einer diskreten Kraftstoffmenge - ein primäres Ziel der Einspritzung, den flüssigen Kraftstoff als möglichst feinen Kraftstoffnebel im Brennraum zu verteilen und damit eine Gemischbildung d. h. eine Durchmischung der im Brennraum befindlichen Luft mit dem eingespritzten Kraftstoff zu erzielen. Der Nebel soll dabei eine Vielzahl möglichst kleiner Kraftstofftropfen umfassen, wodurch der Kraftstoff eine möglichst große Oberfläche aufweist. Der Kraftstoff soll dann im Rahmen der Gemischaufbereitung verdampft werden, wobei auch chemische Vorreaktionen eingeleitet werden können, die die spätere Verbrennung begünstigen.

Bei der Verwendung von gasförmigem Kraftstoff wird die Bildung eines zündfähigen Gemisches prinzipbedingt erheblich erleichtert. Der Kraftstoff liegt bereits gasförmig vor, weshalb die Verdampfung des eingespritzten Kraftstoffes vollständig entfällt.

Zudem kann sich kein Kraftstoff auf der Zylinderinnenwand niederschlagen, was einer Ölverdünnung d. h. einer Kontamination des Öls mit Kraftstoff vorbeugt. Mit der fehlenden Ölverdünnung entfallen auch die sich nach dem Stand der Technik aus der Ölverdünnung ergebenden Nachteile und Einschränkungen.

Der Einspritzzeitpunkt kann bei Anwendung des erfindungsgemäßen Verfahrens aufgrund der Verwendung von gasförmigem Kraftstoff für die Nacheinspritzung frei gewählt werden, ohne dass eine mehr oder weniger umfangreiche Ölverdünnung in Kauf genommen werden muss.

Es ist weder erforderlich, die im Rahmen der Kraftstoffeinspritzung einzuspritzende Kraftstoffmenge auf mehrere Nacheinspritzungen zu verteilen, noch die Einspritzung möglichst früh durchzuführen oder die Anfettung mittels verstärkter Drosselung der angesaugten Luft oder erhöhter Abgasrückführung bei Umgehung einer Nacheinspritzung bzw. Verringerung der nacheingespritzten Kraftstoffmenge zu realisieren.

Dadurch wird die erste der Erfindung zugrunde liegende Teilaufgabe gelöst, nämlich ein Einspritzverfahren aufzuzeigen, mit dem eine mehrfache Kraftstoffeinspritzung bzw. eine Nacheinspritzung von Kraftstoff in mindestens einen Zylinder einer Brennkraftmaschine realisiert werden kann, ohne dass gleichzeitig eine Ölverdünnung durch nacheingespitzten Kraftstoff stattfindet d. h. zu befürchten ist.

Hinsichtlich Dieselmotoren führt das erfindungsgemäße Verfahren darüber hinaus zu Synergieeffekten betreffend die Zündung des gasförmigen Kraftstoffes, falls dies beabsichtigt ist. Während flüssiger Dieselkraftstoff sich bei Vorliegen entsprechender Temperaturen und Druckverhältnisse selbst entzündet, muss gasförmiger Kraftstoff fremdgezündet werden, da er nicht über die selbstzündenden Eigenschaften von Dieselkraftstoff verfügt. Die im Rahmen der mindestens einen Nacheinspritzung zugeführte gasförmige Kraftstoffmenge kann aber in vorteilhafter Weise von der Flammenfront der Hauptverbrennung oder den aus der Hauptverbrennung hervorgehenden Verbrennungsgasen entzündet werden. Auf eine zusätzliche Zündvorrichtung für den gasförmigen Kraftstoff kann verzichtet werden.

Es sei angemerkt, dass die vorliegende Erfindung sich auf Verfahren bezieht, bei denen nach der Haupteinspritzung eine oder mehrere Nacheinspritzungen durchgeführt werden. Dabei bedeutet Haupteinspritzung im Sinne der vorliegenden Anmeldung, die Bereitstellung der überwiegenden Kraftstoffmenge für die Hauptverbrennung. In der Regel wird die Haupteinspritzung weit vor dem oberen Totpunkt (OT) eingeleitet. Eine sogenannte Piloteinspritzung d.h. eine Voreinspritzung von Kraftstoff vor der eigentlichen Haupteinspritzung ist dabei möglich, aber nicht zwingend erforderlich.

Die mindestens eine Nacheinspritzung erfolgt bei mindestens einem Zylinder der Brennkraftmaschine, weshalb Verfahrenvarianten, bei denen die mindestens eine Nacheinspritzung lediglich bei einem Zylinder einer Mehrzylinderbrennkraftmaschine vorgenommen wird, ebenfalls von dem erfindungsgemäßen Verfahren mitumfasst sind.

Die Verwendung des Begriffs "im wesentlichen" im Zusammenhang mit der mindestens einen Nacheinspritzung, soll lediglich zum Ausdruck bringen, dass im Rahmen der mindestens einen Nacheinspritzung zwar grundsätzlich die Einspritzung von gasförmigem Kraftstoff beabsichtigt ist, aber nicht ausgeschlossen werden kann, dass dabei ungewollt kleinere Mengen von flüssigem Kraftstoff in den mindestens einen Zylinder der Brennkraftmaschine gelangen. Dies kann beispielsweise dann der Fall sein, wenn eine einzelne Einspritzdüse verwendet wird d. h. sowohl der flüssige Kraftstoff als auch der gasförmige Kraftstoff mit ein- und derselben Düse eingespritzt wird, was im Rahmen der Figurenbeschreibung noch näher erläutert werden wird.

Weitere vorteilhafte Verfahrensvarianten gemäß den Unteransprüchen werden im folgenden erläutert.

Vorteilhaft sind Ausführungsformen des Verfahrens, bei denen bei mindestens einem Zylinder eine einzelne Einspritzdüse verwendet wird, wobei diese einzelne Einspritzdüse sowohl mit flüssigem als auch mit gasförmigem Kraftstoff versorgt wird. Wird zur Einspritzung des flüssigen und des gasförmigen Kraftstoffes ein- und dieselbe Düse genutzt, muss im Zylinder nur eine Düse angeordnet werden, was aufgrund des begrenzten Platzangebots in der unmittelbaren Nachbarschaft eines Zylinders vorteilhaft sein kann. Zu berücksichtigen ist insbesondere, dass im Zylinderkopf bereits die Steuerorgane - in der Regel Hubventile - und gegebenenfalls die Kühlkanäle einer Wasserkühlung vorgesehen sind, so dass insbesondere bei Vierventilern sehr beengte Platzverhältnisse vorliegen. Zudem soll die Einspritzdüse zur Einspritzung des flüssigen Kraftstoffes üblicherweise in der Art angeordnet werden, dass sie die Gemischbildung unterstützt bzw. fördert, was zu weiteren Einschränkungen führt.

Vorteilhaft sind Ausführungsformen des Verfahrens, bei denen die mindestens eine Nacheinspritzung vorgenommen wird, bevor die Hauptverbrennung des im Rahmen der Haupteinspritzung eingespritzten flüssigen Kraftstoffes abgeschlossen wird, und die nacheingespritzte gasförmige Kraftstoffmenge von der Flammenfront der Hauptverbrennung oder den aus der Hauptverbrennung hervorgehenden Verbrennungsgasen entzündet wird.

Bei dieser Verfahrensvariante dient die mindestens eine Nacheinspritzung der Anhebung der Abgastemperatur, was durch Zündung des nacheingespritzten gasförmigen Kraftstoffes erreicht wird. Die Anhebung der Abgastemperatur kann der Einleitung einer Regeneration des Partikelfilters dienen.

Die Nacheinspritzung und Zündung des gasförmigen Kraftstoffes zur Anhebung der Abgastemperatur ist aber auch zielführend, wenn ein in der Abgasleitung angeordneter Oxidationskatalysator auf Betriebstemperatur zu bringen ist. Gleiches gilt für einen vorhandenen Speicherkatalysator (LNT), dessen bevorzugte Betriebstemperatur zwischen 200°C und 450°C liegt. Für eine Entschwefelung muss der Speicherkatalysator sogar auf Temperaturen zwischen 600°C und 700 °C erwärmt werden.

Zur Erhöhung der Abgastemperatur und Erwärmung der in der Abgasleitung vorgesehenen Abgasnachbehandlungssysteme können zudem Ausführungsformen des Verfahrens vorteilhaft sein, bei denen die mindestens eine Nacheinspritzung vorgenommen wird, nachdem die Hauptverbrennung des im Rahmen der Haupteinspritzung eingespritzten flüssigen Kraftstoffes abgeschlossen wurde, und die nacheingespritzte gasförmige Kraftstoffmenge von den aus der Hauptverbrennung hervorgehenden Verbrennungsgasen entzündet wird.

Vorteilhaft sind auch Ausführungsformen des Verfahrens, bei denen die mindestens eine Nacheinspritzung vorgenommen wird, nachdem die Hauptverbrennung des im Rahmen der Haupteinspritzung eingespritzten flüssigen Kraftstoffes abgeschlossen wurde, und die nacheingespritzte gasförmige Kraftstoffmenge nicht im Zylinder entzündet wird.

Diese Verfahrensvariante kann zur Anreicherung des Abgases mit unverbrannten Kohlenwasserstoffen genutzt werde. Die im Abgas befindlichen unverbannten Kohlenwasserstoffe können als Reduktionsmittel zur Reinigung oder zur Entschweflung eines Speicherkatalysators dienen.

Vorteilhaft sind Ausführungsformen des Verfahrens, bei denen der gasförmige Kraftstoff aus dem flüssigen Kraftstoff gewonnen wird.

Zur Kraftstoffeinspritzung in mindestens einen Zylinder einer direkteinspritzenden Brennkraftmaschine eines Kraftfahrzeuges sind dabei Ausführungsformen des Verfahrens vorteilhaft, bei denen der Kraftstoff ausschließlich in flüssiger Form an Bord des Kraftfahrzeuges bevorratet wird und die Umwandlung des flüssigen Kraftstoffs in den gasförmigen Kraftstoff an Bord des Kraftfahrzeuges vorgenommen wird.

Vorteile bietet diese Verfahrensvariante insbesondere unter Sicherheitsaspekten, denn die Bevorratung von gasförmigem Kraftstoff birgt ein wesentlich höheres Gefahrenpotential in sich als die Lagerung von flüssigem Kraftstoff. Darüber hinaus wären spezielle Gasdruckbehälter erforderlich, wenn der gasförmige Kraftstoff nicht aus dem flüssigen Kraftstoff gewonnen werden würde, wobei diese Druckbehälter zusätzlichen Raum beanspruchen und zu einer Erhöhung der Herstellungskosten führen. Zudem ist eine wesentlich bessere Verfügbarkeit von flüssigen Kraftstoffen gegeben.

Die zweite der Erfindung zugrunde liegende Teilaufgabe wird gelöst durch eine Einspritzdüse zur Einspritzung von Kraftstoff in einen Zylinder einer direkteinspritzenden Brennkraftmaschine, die
■ sowohl zur Einspritzung von flüssigem Kraftstoff als auch zur Einspritzung von gasförmigem Kraftstoff geeignet ist, wozu eine erste Versorgungsleitung zur Versorgung der Einspritzdüse mit gasförmigem Kraftstoff und eine zweite Versorgungsleitung zur Hochdruckversorgung der Einspitzdüse mit flüssigem Kraftstoff vorgesehen ist,
■ mindestens eine Düsenöffnung zur Zuführung des Kraftstoffes in den Zylinder umfasst, und
■ eine in Längsrichtung der Einspritzdüse zwischen einer Ruheposition und einer Arbeitsposition verschiebbare Düsennadel aufweist, wobei die Düsennadel in der Ruheposition die mindestens eine Düsenöffnung verschließt und in der Arbeitsposition diese mindestens eine Düsenöffnung zur Einspritzung des Kraftstoffes freigibt,
und die dadurch gekennzeichnet ist, dass
■ ein zwischen verschiedenen Arbeitspositionen in einer Steuerkammer verschiebbarer Steuerkolben vorgesehen ist, der die Steuerkammer in zwei Teilkammern unterteilt, wobei
■ die zweite Versorgungsleitung in eine erste Teilkammer der Steuerkammer einmündet,
■ eine Niederdruckleitung für den flüssigen Kraftstoff vorgesehen ist, die in eine zweite Teilkammer der Steuerkammer einmündet,
■ in einer ersten Arbeitsposition des Steuerkolbens sowohl eine oberhalb der Düsennadel vorgesehene Kammer - obere Kammer - als auch eine zumindest teilweise unterhalb der Düsennadel vorgesehene Kammer - untere Kammer - mit der ersten Teilkammer und mit der zweiten Versorgungsleitung in Verbindung steht, so dass die Düsennadel sich in der Ruheposition befindet und die mindestens eine Düsenöffnung geschlossen ist,
■ in einer zweiten Arbeitsposition des Steuerkolbens die oberhalb der Düsennadel vorgesehene Kammer - obere Kammer - mit der zweiten Teilkammer und mit der Niederdruckleitung in Verbindung steht und die zumindest teilweise unterhalb der Düsennadel vorgesehene Kammer - untere Kammer - mit der ersten Teilkammer und mit der zweiten Versorgungsleitung in Verbindung steht, so dass die Düsennadel sich in der Arbeitsposition befindet und die mindestens eine Düsenöffnung zur Einspritzung von flüssigem Kraftstoff geöffnet ist,
■ in einer dritten Arbeitsposition des Steuerkolbens sowohl eine oberhalb der Düsennadel vorgesehene Kammer - obere Kammer - als auch eine zumindest teilweise unterhalb der Düsennadel vorgesehene Kammer - untere Kammer - mit der zweiten Teilkammer und mit der Niederdruckleitung in Verbindung steht, so dass die Düsennadel sich in der Ruheposition befindet und die mindestens eine Düsenöffnung geschlossen ist, und
■ in der ersten Versorgungsleitung, die in die untere Kammer einmündet, ein Absperrelement vorgesehen ist und die untere Kammer bei geöffnetem Absperrelement mit komprimierten gasförmigem Kraftstoff versorgt und beaufschlagt wird, so dass die mindestens eine Düsenöffnung in der dritten Arbeitsposition des Steuerkolbens zur Einspritzung von gasförmigem Kraftstoff geöffnet ist.

Das für das erfindungsgemäße Verfahren Gesagte gilt in analoger Weise für die erfindungsgemäße Einspritzdüse, weshalb auf die entsprechenden Ausführungen Bezug genommen wird.

Vorteilhaft sind Ausführungsformen der Einspritzdüse, bei denen in der Verbindung zwischen Steuerkammer und unterer Kammer ein Absperrelement vorgesehen ist.

Vorteilhaft sind des weiteren Ausführungsformen der Einspritzdüse, bei denen in der oberen Kammer eine Rückstellfeder vorgesehen ist, die die Düsennadel in Richtung Ruheposition mit einer Kraft beaufschlagt.

Die Rückstellfeder sorgt unter anderem dafür, dass die Nadel sich nicht frei bewegt und sich in der Ruheposition befindet, wenn in der oberen und unteren Kammer gleiche Druckverhältnisse vorliegen. Dadurch wird ein ungewolltes Freigeben d. h. Öffnen der mindestens einen Düsenöffnung verhindert. Die Beaufschlagung der Düsennadel mit einer Federkraft sorgt auch für eine kontrollierte Bewegung der Nadel bei Änderung der Druckverhältnisse und beugt auf diese Weise Beschädigungen der Nadel vor.

Im folgenden wird die Erfindung anhand einer Ausführungsform der erfindungsgemäßen Einspritzdüse gemäß den Figuren 1 bis 4 näher beschrieben. Hierbei zeigt:
- Fig. 1: schematisch eine erste Momentaufnahme einer ersten Ausführungsform einer Einspritzdüse mit dem Steuerkolben in einer ersten Arbeitsposition,
- Fig. 2: eine zweite Momentaufnahme der in Figur 1 dargestellten Einspritzdüse mit dem Steuerkolben in einer zweiten Arbeitsposition,
- Fig. 3: eine dritte Momentaufnahme der in Figur 1 dargestellten Einspritzdüse mit dem Steuerkolben in einer dritten Arbeitsposition, und
- Fig. 4: eine vierte Momentaufnahme der in Figur 1 dargestellten Einspritzdüse mit dem Steuerkolben in einer dritten Arbeitsposition.

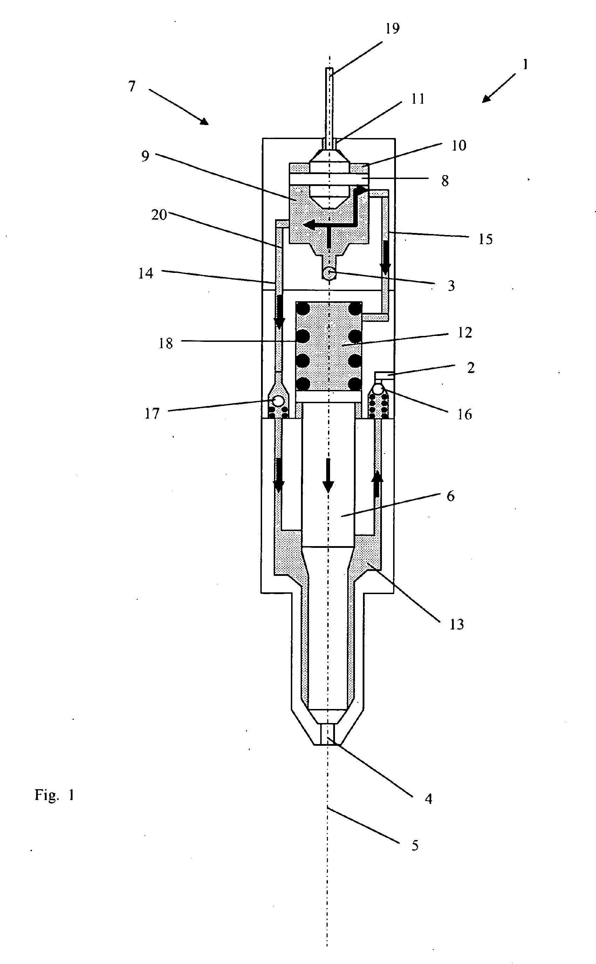

Figur 1 zeigt schematisch eine erste Momentaufnahme einer ersten Ausführungsform der Einspritzdüse 1 mit dem Steuerkolben 8 in einer ersten Arbeitsposition.

Die dargestellte Einspritzdüse 1 dient der Einspritzung von Kraftstoff 20, 21 in einen Zylinder einer direkteinspritzenden Brennkraftmaschine, wobei sowohl flüssiger Kraftstoff 20 als auch gasförmiger Kraftstoff 21 dem Zylinder (nicht dargestellt) zugeführt werden kann.

Hierzu ist eine erste Versorgungsleitung 2 vorgesehen, welche die Einspritzdüse 1 mit gasförmigem Kraftstoff 21 versorgt. Zur Versorgung der Einspritzdüse 1 mit flüssigem Kraftstoff 20 ist eine weitere, zweite Versorgungsleitung 3 vorgesehen, bei der es sich um eine Hochdruckleitung handelt, die den flüssigen Kraftstoff 20 unter hohem Druck, beispielsweise mit einem Druck von 1400 bis 2000 bar, bereitstellt, wohingegen der gasförmige Kraftstoff 21 in der Regel wesentlich niedrigere Drücke aufweist, beispielsweise zwischen 50 und 100 bar.

Die Einspritzdüse 1 verfügt über eine Düsenöffnung 4 zur Zuführung des Kraftstoffes 20,21, wobei diese Düsenöffnung 4 sowohl zur Einspritzung des flüssigen Kraftstoffs 20 als auch zur Einspritzung des gasförmigen Kraftstoffs 21 genutzt wird.

Die Düsenöffnung 4 wird - in der in Figur 1 dargestellten Momentaufnahme - von einer Düsennadel 6, die in Richtung der Längsachse 5 der Einspritzdüse 1 translatorisch beweglich d. h. verschiebbar ist, verschlossen, so dass kein Kraftstoff 20,21 austreten kann. Die Düsennadel 6 befindet sich dabei in ihrer Ruheposition.

Zur Steuerung der Einspritzung ist die Einspritzdüse 1 mit einem Steuerkolben 8 ausgestattet, der in einer Steuerkammer 7 in Richtung der Längsachse 5 der Einspritzdüse 1 translatorisch beweglich d. h. verschiebbar angeordnet ist. Dabei kann der Steuerkolben 8 zwischen verschiedenen Arbeitspositionen bewegt werden, was im weiteren Verlauf der Figurenbeschreibung noch näher beschrieben werden wird.

Der Steuerkolben 8 wird mittels einer Kolbenstange 19 verschoben, die am oberen Ende des Steuerkolbens 8 angebracht ist und beispielsweise mittels eines piezoelektrischen Aktuators (nicht dargestellt) betätigt wird. Der Steuerkolben 8 unterteilt die Steuerkammer 7 in zwei Teilkammern 9,10.

Die erste Teilkammer 9 liegt unterhalb des Steuerkolbens 8, wobei die zweite Versorgungsleitung 3, die zur Versorgung der Einspritzdüse 1 mit flüssigem Kraftstoff 20 dient, in diese erste Teilkammer 9 der Steuerkammer 7 mündet.

Die zweite Teilkammer 10 liegt oberhalb des Steuerkolbens 8 und steht in Verbindung mit einer Niederdruckleitung 11 für den flüssigen Kraftstoff 20, die in diese zweite Teilkammer 10 einmündet.

Die Bewegung der Düsennadel 6 wird gesteuert, indem der Druck in einer oberhalb der Düsennadel 6 vorgesehenen Kammer 12 - im folgenden obere Kammer 12 genannt - und der Druck in einer Kammer 13, die teilweise unterhalb der Düsennadel 6 angeordnet ist und im folgenden untere Kammer 13 genannt wird, verändert wird. Beide Kammern 12,13 können durch Verschieben des Steuerkolbens 8 sowohl mit der zweiten Versorgungsleitung 3 d.h. der Kraftstoffhochdruckleitung als auch mit der Niederdruckleitung 11 in Verbindung gebracht werden.

Die in Figur 1 wiedergegebene Momentaufnahme zeigt den Steuerkolben 8 in einer ersten Arbeitsposition. In dieser ersten Arbeitsposition des Steuerkolbens 8 steht sowohl die obere Kammer 12 als auch die untere Kammer 13 mit der ersten Teilkammer 9 und folglich mit der zweiten Versorgungsleitung 3 in Verbindung 14,15.

Damit liegt in beiden Kammern 12,13 der gleiche Druck, nämlich der Druck der Hochdruckleitung 3, an. Aufgrund der unterschiedlichen Flächen, über welche der Druck der jeweiligen Kammer 12,13 an der Düsennadel 6 angreift, wird die Düsennadel 6 in Richtung der Längsachse 5 der Einspritzdüse 1 d.h. in Richtung Ruheposition, in der die Düsenöffnung 4 verschlossen ist, kraftbeaufschlagt. Dies wird von einer in der oberen Kammer 12 vorgesehenen Rückstellfeder 18 unterstützt.

Das Absperrelement 16 ist verschlossen, so dass kein gasförmiger Kraftstoff 21 in die untere Kammer 13 gelangt. Das Absperrelement 17 ist hingegen offen, so dass flüssiger Kraftstoff 20 über die zweite Versorgungsleitung 3, die erste Teilkammer 9 und die Verbindungsleitung 14 in die untere Kammer 13 gelangt, weshalb in der unteren Kammer 13 der Druck der Hochdruckleitung 3 anliegt, was den Schließvorgang des Absperrelements 16 unterstützt.

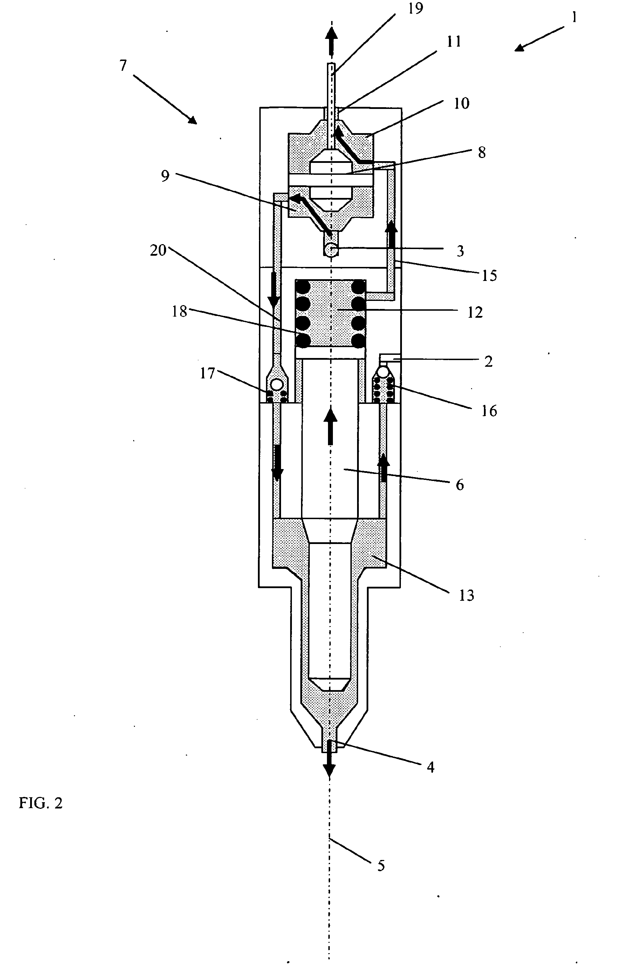

Figur 2 zeigt eine zweite Momentaufnahme der in Figur 1 dargestellten Einspritzdüse 1 mit dem Steuerkolben 8 in einer zweiten Arbeitsposition. Es soll nur auf die Unterschiede zu der in Figur 1 dargestellten Momentaufnahme eingegangen werden, weshalb im übrigen Bezug genommen wird auf Figur 1 und die im Zusammenhang mit dieser Figur gemachten Ausführungen.

Bei der in Figur 2 gezeigten Momentaufnahme befindet sich die Düsennadel 6 in der Arbeitsposition, in der die Düsenöffnung 4 zur Einspritzung des Kraftstoffes 20,21 - vorliegend des flüssigen Kraftstoffes 20 - freigegeben wird.

Dabei befindet sich der Steuerkolben 8 in einer zweiten Arbeitsposition, in der die obere Kammer 12 mit der zweiten Teilkammer 10 d. h. mit der Niederdruckleitung 11 in Verbindung 15 steht, wobei die untere Kammer 13 mit der ersten Teilkammer 9 und folglich mit der zweiten Versorgungsleitung 3 in Verbindung 14 steht. Aufgrund der Druckdifferenz der beiden Kammern 12,13 wird die Düsennadel 6 entgegen der Federkraft der Rückstellfeder 18 von der Ruheposition (siehe Figur 1) in die Arbeitsposition verschoben. Die Düsenöffnung 4 ist zur Einspritzung von flüssigem Kraftstoff 20 geöffnet.

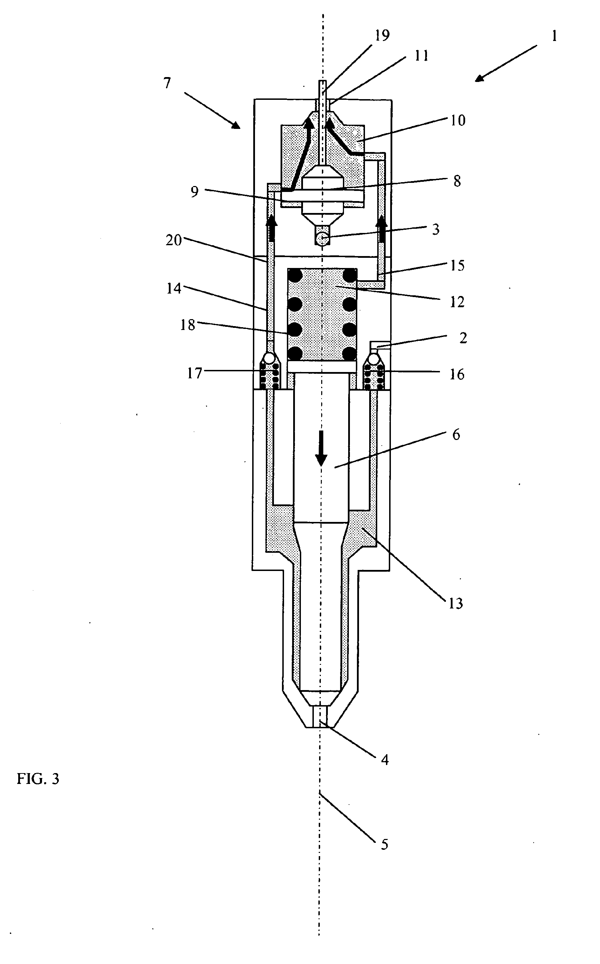

Figur 3 zeigt eine dritte Momentaufnahme der in Figur 1 dargestellten Einspritzdüse 1 mit dem Steuerkolben 8 in einer dritten Arbeitsposition. Es soll nur auf die Unterschiede zu der in Figur 1 dargestellten Momentaufnahme eingegangen werden, weshalb im übrigen Bezug genommen wird auf Figur 1 und die im Zusammenhang mit dieser Figur gemachten Ausführungen.

Bei der in Figur 3 gezeigten Momentaufnahme befindet sich die Düsennadel 6 - wie in Figur - in ihrer Ruheposition, in der die Düsenöffnung 4 durch die Düsennadel 6 verschlossen wird.

Der Steuerkolben 8 ist in einer dritten Arbeitsposition, in der sowohl die obere Kammer 12 als auch die untere Kammer 13 mit der zweiten Teilkammer 10 und folglich mit der Niederdruckleitung 11 in Verbindung 14, 15 steht, so dass der Druck in beiden Kammern 12,13 gleichgroß ist und die Düsennadel 6 - unterstützt von der Rückstellfeder 18 - in der Ruheposition gehalten wird, in der die Düsenöffnung 4 verschlossen ist.

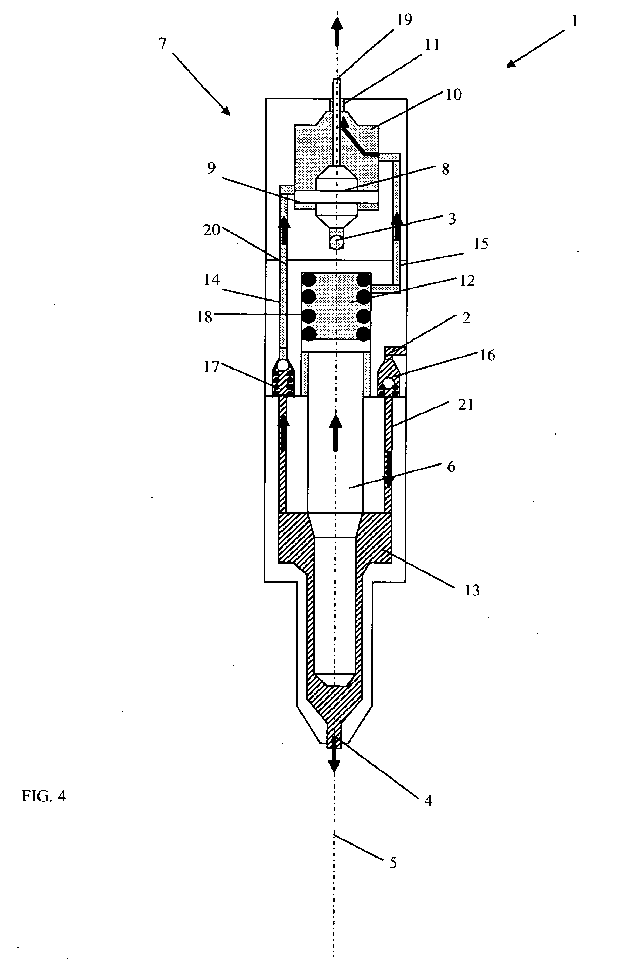

Figur 4 zeigt eine vierte Momentaufnahme der in den Figuren 1 bis 3 dargestellten Einspritzdüse 1 mit dem Steuerkolben 8 in einer dritten Arbeitsposition. Es soll nur auf die Unterschiede zu der in Figur 3 dargestellten Momentaufnahme eingegangen werden, weshalb im übrigen Bezug genommen wird auf Figur 3 und die im Zusammenhang mit dieser Figur gemachten Ausführungen.

Wie bei der in Figur 3 gezeigten Momentaufnahme befindet sich der Steuerkolben 8 in der dritten Arbeitsposition, wobei sich die Düsennadel 6 im Gegensatz zu der in Figur 3 gezeigten Momentaufnahme in der Arbeitsposition befindet, in der die Düsenöffnung 4 durch die Düsennadel 6 freigegeben wird. Die Gründe sind die folgenden.

Im Unterschied zu Figur 3 ist das Absperrelement 16 - beispielsweise durch Öffnen eines Ventils (nicht dargestellt) in der zweiten Versorgungsleitung 2 - geöffnet, so dass die erste Versorgungsleitung 2 mit der unteren Kammer 13 in Verbindung steht. In die untere Kammer 13 wird bei geöffnetem Absperrelement 16 komprimierter gasförmiger Kraftstoff 21 eingeleitet.

Da die untere Kammer 13 entsprechend Figur 3 mit der Niederdruckleitung 11 in Verbindung 14 steht und der gasförmige Kraftstoff 21 einen höheren Druck als der flüssige Kraftstoff 20 der Niederdruckleitung 11 aufweist, schließt sich das Absperrelement 17.

Durch die geöffnete Düsenöffnung 4 wird dem Zylinder (nicht dargestellt) gasförmiger Kraftstoff 21 zugeführt, wobei zumindest auch ein Teil des restlichen, sich in der unteren Kammer 13 befindlichen flüssigen Kraftstoffs 20 die Einspritzdüse 1 durch die Düsenöffnung 4 verlässt. Um die Menge an flüssigem Kraftstoff 20, die dem Zylinder während der Nacheinspritzung zugeführt wird, zu minimieren, sollte das Volumen der unteren Kammer 13 so klein wie möglich sein.

### Bezugszeichen

- 1: Einspritzdüse
- 2: erste Versorgungsleitung
- 3: zweite Versorgungsleitung
- 4: Düsenöffnung
- 5: Längsachse der Einspritzdüse
- 6: Düsennadel
- 7: Steuerkammer
- 8: Steuerkolben
- 9: erste Teilkammer
- 10: zweite Teilkammer
- 11: Niederdruckleitung
- 12: obere Kammer
- 13: untere Kammer
- 14: Verbindung, Verbindungsleitung
- 15: Verbindung, Verbindungsleitung
- 16: Absperrelement
- 17: Absperrelement
- 18 8: Rückstellfeder
- 19: Kolbenstange
- 20: flüssiger Kraftstoff
- 21: gasförmiger Kraftstoff

- AGR: Abgasrückführung
- CO: Kohlenmonoxid
- CO₂: Kohlenstoffdioxid
- KW: Kurbelwinkel
- deNOₓ: Reinigung des Speicherkatalysators
- deSoot: Regeneration des Partikelfilters
- deSOₓ: Desulfuration, Entschwefelung
- HC: unverbrannte Kohlenwasserstoffe
- H₂O: Wasser
- N₂: Stickstoff
- NOₓ: Stickoxide
- LNT: Lean NOₓ Trap
- OT: oberer Totpunkt
- SCR: Selective Catalytic Reduction
- SOₓ: Schwefeloxide
- UT: unterer Totpunkt

## Patentansprüche

1. Verfahren zur Kraftstoffeinspritzung in mindestens einen Zylinder einer direkteinspritzenden Brennkraftmaschine, welche in dem mindestens einen Zylinder mindestens eine Einspritzdüse (1) zur Einspritzung von Kraftstoff (20, 21) in diesen Zylinder aufweist, wobei mittels dieser mindestens einen Einspritzdüse (1) sowohl flüssiger Kraftstoff (20) als auch gasförmiger Kraftstoff (21) einspritzbar ist, **dadurch gekennzeichnet, dass**
■ während einer Haupteinspritzung, in deren Rahmen der Kraftstoff für die Hauptverbrennung bereitgestellt wird, flüssiger Kraftstoff (20) mittels der mindestens einen Einspritzdüse (1) eingespritzt wird, und
■ mindestens eine Nacheinspritzung in mindestens einen Zylinder der Brennkraftmaschine vorgenommen wird, in deren Rahmen im wesentlichen gasförmiger Kraftstoff (21) mittels der mindestens einen Einspritzdüse (1) eingespritzt wird.

2. Verfahren nach Anspruch 1, **dadurch gekennzeichnet, dass** in mindestens einem Zylinder eine einzelne Einspritzdüse (1) verwendet wird, wobei diese einzelne Einspritzdüse (1) sowohl mit flüssigem (20) als auch mit gasförmigem Kraftstoff (21) versorgt wird.

3. Verfahren nach einem der vorherigen Ansprüche, **dadurch gekennzeichnet, dass** die mindestens eine Nacheinspritzung vorgenommen wird, bevor die Hauptverbrennung des im Rahmen der Haupteinspritzung eingespritzten flüssigen Kraftstoffes (20) abgeschlossen wird, und die nacheingespritzte gasförmige Kraftstoffmenge (21) von der Flammenfront der Hauptverbrennung oder den aus der Hauptverbrennung hervorgehenden Verbrennungsgasen entzündet wird.

4. Verfahren nach einem der Ansprüche 1 oder 2, **dadurch gekennzeichnet, dass** die mindestens eine Nacheinspritzung vorgenommen wird, nachdem die Hauptverbrennung des im Rahmen der Haupteinspritzung eingespritzten flüssigen Kraftstoffes (20) abgeschlossen wurde, und die nacheingespritzte gasförmige Kraftstoffmenge (21) von den aus der Hauptverbrennung hervorgehenden Verbrennungsgasen entzündet wird.

5. Verfahren nach einem der Ansprüche 1 oder 2, **dadurch gekennzeichnet, dass** die mindestens eine Nacheinspritzung vorgenommen wird, nachdem die Hauptverbrennung des im Rahmen der Haupteinspritzung eingespritzten flüssigen Kraftstoffes (20) abgeschlossen wurde, und die nacheingespritzte gasförmige Kraftstoffmenge (21) nicht im Zylinder entzündet wird.

6. Verfahren nach einem der vorherigen Ansprüche, **dadurch gekennzeichnet, dass** der gasförmige Kraftstoff (21) aus dem flüssigen Kraftstoff (20) gewonnen wird.

7. Verfahren nach Anspruch 6 zur Kraftstoffeinspritzung in mindestens einen Zylinder einer direkteinspritzenden Brennkraftmaschine eines Kraftfahrzeuges, **dadurch gekennzeichnet, dass** der Kraftstoff (20, 21) ausschließlich in flüssiger Form (20) an Bord des Kraftfahrzeuges bevorratet wird und die Umwandlung des flüssigen Kraftstoffs (20) in den gasförmigen Kraftstoff (21) an Bord des Kraftfahrzeuges vorgenommen wird.

8. Einspritzdüse (1) zur Einspritzung von Kraftstoff (20, 21) in einen Zylinder einer direkteinspritzenden Brennkraftmaschine, die
■ sowohl zur Einspritzung von flüssigem Kraftstoff (20) als auch zur Einspritzung von gasförmigem Kraftstoff (21) geeignet ist, wozu eine erste Versorgungsleitung (2) zur Versorgung der Einspritzdüse (1) mit gasförmigem Kraftstoff (21) und eine zweite Versorgungsleitung (3) zur Hochdruckversorgung der Einspitzdüse (1) mit flüssigem Kraftstoff (20) vorgesehen ist,
■ mindestens eine Düsenöffnung (4) zur Zuführung des Kraftstoffes (20,21) in den Zylinder umfasst, und
■ eine in Richtung Längsachse (5) der Einspritzdüse (1) zwischen einer Ruheposition und einer Arbeitsposition verschiebbare Düsennadel (6) aufweist, wobei die Düsennadel (6) in der Ruheposition die mindestens eine Düsenöffnung (4) verschließt und in der Arbeitsposition diese mindestens eine Düsenöffnung (4) zur Einspritzung des Kraftstoffes (20, 21) freigibt,
**dadurch gekennzeichnet, dass**
■ ein zwischen verschiedenen Arbeitspositionen in einer Steuerkammer (7) verschiebbarer Steuerkolben (8) vorgesehen ist, der die Steuerkammer (7) in zwei Teilkammern (9,10) unterteilt, wobei
■ die zweite Versorgungsleitung (3) in eine erste Teilkammer (9) der Steuerkammer (7) einmündet,
■ eine Niederdruckleitung (11) für den flüssigen Kraftstoff (20) vorgesehen ist, die in eine zweite Teilkammer (10) der Steuerkammer (7) einmündet,
■ in einer ersten Arbeitsposition des Steuerkolbens (8) sowohl eine oberhalb der Düsennadel (6) vorgesehene Kammer (12) - obere Kammer (12) - als auch eine zumindest teilweise unterhalb der Düsennadel (6) vorgesehene Kammer (13) - untere Kammer (13) - mit der ersten Teilkammer (9) und mit der zweiten Versorgungsleitung (3) in Verbindung (14, 15) steht, so dass die Düsennadel (6) sich in der Ruheposition befindet und die mindestens eine Düsenöffnung (4) geschlossen ist,
■ in einer zweiten Arbeitsposition des Steuerkolbens (8) die oberhalb der Düsennadel (6) vorgesehene Kammer (12) - obere Kammer (12) - mit der zweiten Teilkammer (10) und mit der Niederdruckleitung (11) in Verbindung (15) steht und die zumindest teilweise unterhalb der Düsennadel (6) vorgesehene Kammer (13) - untere Kammer (13) - mit der ersten Teilkammer (9) und mit der zweiten Versorgungsleitung (3) in Verbindung (14) steht, so dass die Düsennadel (6) sich in der Arbeitsposition befindet und die mindestens eine Düsenöffnung (4) zur Einspritzung von flüssigem Kraftstoff (20) geöffnet ist,
■ in einer dritten Arbeitsposition des Steuerkolbens (8) sowohl eine oberhalb der Düsennadel (6) vorgesehene Kammer (12) - obere Kammer (12) - als auch eine zumindest teilweise unterhalb der Düsennadel (6) vorgesehene Kammer (13) - untere Kammer (13) - mit der zweiten Teilkammer (10) und mit der Niederdruckleitung (11) in Verbindung (14, 15) steht, so dass die Düsennadel (6) sich in der Ruheposition befindet und die mindestens eine Düsenöffnung (4) geschlossen ist, und
■ in der ersten Versorgungsleitung (2), die in die untere Kammer (13) einmündet, ein Absperrelement (16) vorgesehen ist und die untere Kammer (13) bei geöffnetem Absperrelement (16) mit komprimierten gasförmigem Kraftstoff versorgt und beaufschlagt wird, so dass die mindestens eine Düsenöffnung (4) in der dritten Arbeitsposition des Steuerkolbens (8) zur Einspritzung von gasförmigem Kraftstoff (21) geöffnet ist.

9. Einspritzdüse (1) nach Anspruch 8, **dadurch gekennzeichnet, dass** in der Verbindung (14) zwischen Steuerkammer (7) und unterer Kammer (13) eine Absperrelement (17) vorgesehen ist.

10. Einspritzdüse (1) nach Anspruch 8 oder 9, **dadurch gekennzeichnet, dass** in der oberen Kammer (12) eine Rückstellfeder (18) vorgesehen ist, die die Düsennadel (6) in Richtung Längsachse (5) bzw. Ruheposition mit einer Kraft beaufschlagt.

## Claims

1. Method for the injection of fuel into at least one cylinder of a direct-injection internal combustion engine which, in the at least one cylinder, has at least one injection nozzle (1) for the injection of fuel (20, 21) into said cylinder, it being possible for both liquid fuel (20) and also gaseous fuel (21) to be injected by means of said at least one injection nozzle (1), **characterized in that**,
■ during a main injection within which the fuel for the main combustion is provided, liquid fuel (20) is injected by means of the at least one injection nozzle (1), and
■ at least one post-injection into at least one cylinder of the internal combustion engine is carried out, within which post-injection substantially gaseous fuel (21) is injected by means of the at least one injection nozzle (1).

2. Method according to Claim 1, **characterized in that**, in at least one cylinder, a single injection nozzle (1) is used, to which single injection nozzle (1) both liquid fuel (20) and also gaseous fuel (21) are supplied.

3. Method according to one of the preceding claims, **characterized in that** the at least one post-injection is carried out before the main combustion of the liquid fuel (20) injected within the main injection is complete, and the post-injected gaseous fuel quantity (21) is ignited by the flame front of the main combustion or by the combustion gases arising from the main combustion.

4. Method according to either of Claims 1 and 2, **characterized in that** the at least one post-injection is carried out after the main combustion of the liquid fuel (20) injected within the main injection is complete, and the post-injected gaseous fuel quantity (21) is ignited by the combustion gases arising from the main combustion.

5. Method according to either of Claims 1 and 2, **characterized in that** the at least one post-injection is carried out after the main combustion of the liquid fuel (20) injected within the main injection is complete, and the post-injected gaseous fuel quantity (21) is not ignited in the cylinder.

6. Method according to one of the preceding claims, **characterized in that** the gaseous fuel (21) is obtained from the liquid fuel (20).

7. Method according to Claim 6 for the injection of fuel into at least one cylinder of a direct-injection internal combustion engine of a motor vehicle, **characterized in that** the fuel (20, 21) is stored exclusively in liquid form (20) on board the motor vehicle and the conversion of the liquid fuel (20) into the gaseous fuel (21) is carried out on board the motor vehicle.

8. Injection nozzle (1) for the injection of fuel (20, 21) into a cylinder of a direct-injection internal combustion engine, which injection nozzle
■ is suitable both for injecting liquid fuel (20) and also for injecting gaseous fuel (21), for which purpose a first supply line (2) for the supply of gaseous fuel (21) to the injection nozzle (1) and a second supply line (3) for the high-pressure supply of liquid fuel (20) to the injection nozzle (1) are provided,
■ comprises at least one nozzle opening (4) for the delivery of the fuel (20, 21) into the cylinder, and
■ has a nozzle needle (6) which is movable in the direction of a longitudinal axis (5) of the injection nozzle (1) between a rest position and a working position, wherein the nozzle needle (6) closes off the at least one nozzle opening (4) in the rest position and opens up said at least one nozzle opening (4) for the injection of the fuel (20, 21) in the working position,
**characterized in that**
■ a control piston (8) is provided which is movable between different working positions in a control chamber (7) and which divides the control chamber (7) into two sub-chambers (9, 10), wherein
■ the second supply line (3) opens into a first sub-chamber (9) of the control chamber (7),
■ a low-pressure line (11) for the liquid fuel (20) is provided, which low-pressure line opens into a second sub-chamber (10) of the control chamber (7),
■ in a first working position of the control piston (8), both a chamber (12) - upper chamber (12) - provided above the nozzle needle (6) and also a chamber (13) - lower chamber (13) - provided at least partially below the nozzle needle (6) are connected (14, 15) to the first sub-chamber (9) and to the second supply line (3), such that the nozzle needle (6) is situated in the rest position and the at least one nozzle opening (4) is closed,
■ in a second working position of the control piston (8), the chamber (12) - upper chamber (12) - provided above the nozzle needle (6) is connected (15) to the second sub-chamber (10) and to the low-pressure line (11) and the chamber (13) - lower chamber (13) - provided at least partially below the nozzle needle (6) is connected (14) to the first sub-chamber (9) and to the second supply line (3), such that the nozzle needle (6) is situated in the working position and the at least one nozzle opening (4) is open for the injection of liquid fuel (20),
■ in a third working position of the control piston (8), both a chamber (12) - upper chamber (12) - provided above the nozzle needle (6) and also a chamber (13) - lower chamber (13) - provided at least partially below the nozzle needle (6) are connected (14, 15) to the second sub-chamber (10) and to the low-pressure line (11), such that the nozzle needle (6) is situated in the rest position and the at least one nozzle opening (4) is closed, and
■ a shut-off element (16) is provided in the first supply line (2) which opens into the lower chamber (13), and when the shut-off element (16) is open, the lower chamber (13) is supplied and charged with compressed gaseous fuel, such that when the control piston (8) is in the third working position, the at least one nozzle opening (4) is open for the injection of gaseous fuel (21).

9. Injection nozzle (1) according to Claim 8, **characterized in that** a shut-off element (17) is provided in the connection (14) between the control chamber (7) and lower chamber (13).

10. Injection nozzle (1) according to Claim 8 or 9, **characterized in that** a restoring spring (18) which loads the nozzle needle (6) with a force in the direction of the longitudinal axis (5) and rest position is provided in the upper chamber (12).

## Revendications

1. Procédé pour l'injection de carburant dans au moins un cylindre d'un moteur à combustion interne à injection directe, qui présente, dans l'au moins un cylindre au moins une buse d'injection (1) pour l'injection de carburant (20, 21) dans ce cylindre, du carburant liquide (20) ainsi que du carburant gazeux (21) pouvant être injectés au moyen de cette au moins une buse d'injection (1), **caractérisé en ce que**
- pendant une injection principale, au cours de laquelle le carburant est mis à disposition pour la combustion principale, du carburant liquide (20) est injecté au moyen de l'au moins une buse d'injection (1), et
- au moins une post-injection a lieu dans au moins un cylindre du moteur à combustion interne, au cours de laquelle du carburant essentiellement gazeux (21) est injecté au moyen de l'au moins une buse d'injection (1).

2. Procédé selon la revendication 1, **caractérisé en ce que** dans au moins un cylindre, on utilise une buse d'injection unique (1), cette buse d'injection unique (1) étant alimentée à la fois avec du carburant liquide (20) et du carburant gazeux (21).

3. Procédé selon l'une quelconque des revendications précédentes, **caractérisé en ce que** l'au moins une post-injection a lieu avant que la combustion principale du carburant liquide (20) injecté au cours de l'injection principale ne soit terminée, et la quantité de carburant gazeux (21) post-injectée est enflammée par le front de flamme de la combustion principale ou par les gaz de combustion issus de la combustion principale.

4. Procédé selon l'une quelconque des revendications 1 ou 2, **caractérisé en ce que** l'au moins une post-injection a lieu après que la combustion principale du carburant liquide (20) injecté au cours de l'injection principale s'est terminée, et la quantité de carburant gazeux (21) post-injecté est allumée par les gaz de combustion issus de la combustion principale.

5. Procédé selon l'une quelconque des revendications 1 ou 2, **caractérisé en ce que** l'au moins une post-injection a lieu après que la combustion principale du carburant liquide (20) injecté au cours de l'injection principale s'est terminée, et la quantité de carburant gazeux (21) post-injecté n'est pas allumée dans le cylindre.

6. Procédé selon l'une quelconque des revendications précédentes, **caractérisé en ce que** le carburant gazeux (21) est obtenu à partir du carburant liquide (20).

7. Procédé selon la revendication 6 pour l'injection de carburant dans au moins un cylindre d'un moteur à combustion interne à injection directe d'un véhicule automobile, **caractérisé en ce que** le carburant (20, 21) est stocké exclusivement sous forme liquide (20) à bord du véhicule automobile, et la conversion du carburant liquide (20) en carburant gazeux (21) est effectuée à bord du véhicule automobile.

8. Buse d'injection (1) pour l'injection de carburant (20, 21) dans un cylindre d'un moteur à combustion interne à injection directe,
- qui est appropriée à la fois pour l'injection de carburant liquide (20) et pour l'injection de carburant gazeux (21), et pour laquelle une première conduite d'alimentation (2) pour l'alimentation en carburant gazeux (21) de la buse d'injection (1) et une deuxième conduite d'alimentation (3) pour l'alimentation haute pression en carburant liquide (20) de la buse d'injection (1) sont prévues,
- qui comprend au moins une ouverture de buse (4) pour l'alimentation en carburant (20, 21) dans le cylindre,
- qui présente une aiguille de buse (6) déplaçable dans la direction de l'axe longitudinal (5) de la buse d'injection (1) entre une position de repos et une position de travail, l'aiguille de buse (6), dans la position de repos, fermant l'au moins une ouverture de buse (4), et dans la position de travail, libérant cette au moins une ouverture de buse (4) pour l'injection de carburant (20, 21),
**caractérisée en ce que**
- il est prévu un piston de commande (8) déplaçable entre différentes positions de travail dans une chambre de commande (7), lequel divise la chambre de commande (7) en deux chambres partielles (9, 10),
- la deuxième conduite d'alimentation (3) débouchant dans une première chambre partielle (9) de la chambre de commande (7),
- il est prévu une conduite basse pression (11) pour le carburant liquide (20), laquelle débouche dans une deuxième chambre partielle (10) de la chambre de commande (7),
- dans une première position de travail du piston de commande (8), à la fois une chambre (12) prévue au-dessus de l'aiguille de buse (6) - la chambre supérieure (12) - et une chambre (13) prévue au moins en partie en dessous de l'aiguille de buse (6) - la chambre inférieure (13) -, sont en liaison (14, 15) avec la première chambre partielle (9) et avec la deuxième conduite d'alimentation (3), de sorte que l'aiguille de buse (6) se trouve dans la position de repos et que l'au moins une ouverture de buse (4) soit fermée,
- dans une deuxième position de travail du piston de commande (8), la chambre (12) prévue au-dessus de l'aiguille de buse (6) - la chambre supérieure (12) - est en liaison avec la deuxième chambre partielle (10) et avec la conduite basse pression (11) et la chambre (13) prévue au moins en partie en dessous de l'aiguille de buse (6) - la chambre inférieure (13) - est en liaison (14) avec la première chambre partielle (9) et avec la deuxième conduite d'alimentation (3), de sorte que l'aiguille de buse (6) se trouve dans la position de travail et que l'au moins une ouverture de buse (4) soit ouverte en vue de l'injection de carburant liquide (20),
- dans une troisième position de travail du piston de commande (8), à la fois une chambre (12) prévue au-dessus de l'aiguille de buse (6)
- la chambre supérieure (12) et une chambre (13) prévue au moins en partie en dessous de l'aiguille de buse (6) - la chambre inférieure (13) - sont en liaison (14, 15) avec la deuxième chambre partielle (10) et avec la conduite basse pression (11), de sorte que l'aiguille de buse (6) se trouve dans la position de repos et que l'au moins une ouverture de buse (4) soit fermée, et
- dans la première conduite d'alimentation (2), qui débouche dans la chambre inférieure (13), est prévu un élément d'arrêt (16) et la chambre inférieure (13), lorsque l'élément d'arrêt (16) est ouvert, est alimentée et sollicitée avec du carburant gazeux comprimé, de sorte que l'au moins une ouverture de buse (4) dans la troisième position de travail du piston de commande (8) soit ouverte pour l'injection de carburant gazeux (21).

9. Buse d'injection (1) selon la revendication 8, **caractérisée en ce que** dans la liaison (14) entre la chambre de commande (7) et la chambre inférieure (13) est prévu un élément d'arrêt (17).

10. Buse d'injection (1) selon la revendication 8 ou 9, **caractérisée en ce que** dans la chambre supérieure (12) est prévu un ressort de rappel (18) qui sollicite avec une force l'aiguille de buse (6) dans la direction de l'axe longitudinal (5) ou dans la position de repos.
